# EUROPEAN PATENT APPLICATION

(11) **EP 2 487 628 A1**
(43) Date of publication of application: **15.08.2012**
(21) Application number: 11153858.3
(22) Date of filing: 09.02.2011
(51) Int. Cl.: G06Q 10/00

(54) **An integrated engineering and workflow system for engineering and executing workflows of mechatronic objects**

(71) Applicant: SIEMENS AKTIENGESELLSCHAFT, 80333 München (DE)
(72) Inventor: Böhm, Birthe, 90491, Nürnberg (DE); Gewald, Norbert, 91052, Erlangen (DE); Tetzner, Thilo, 90491, Nürnberg (DE)

(57) **Abstract**

An integrated engineering and workflow system (3) for engineering and executing workflow of mechatronic objects (2-i), wherein each mechatronic object (2-i) comprises workflow data controlling an execution of at least one workflow within a life-cycle phase of a corresponding mechatronic entity (1-i).

## Description

The invention relates to an integrated engineering and workflow system for engineering and executing workflow of mechatronic objects, and in particular to an active workflow support with mechatronic objects.

Management and controlling of tasks in product and project business is crucial for a successful design, production or implementation as well as operation, maintenance and service. Furthermore, management and controlling of tasks in product and project business is important for maintenance and service, modernization and, if necessary, scrapping of products as well as plants, i.e. during the whole lifecycle of products and plants. It is desirable for a product manager and other responsible persons in charge of the project to know at any time during a project, which may be conducted in and across any lifecycle phase of a product or plant, the realistic status in terms of timelines, quality, project progress and efforts as well as costs. This information should be available without too much effort for the responsible person. During project implementation, the necessary activities have to be executed by the involved project members correctly and efficiently which means that there has to be sufficient support for the daily work of the project members on a technical level. Usually, a project plan is defined where a project workflow system can be used in which the project plans are implemented as workflows which have to be executed during the project. In general, a workflow comprises some activities which are assigned to specific roles or directly to experts in the project and which are started automatically based on preconditions that have to be fulfilled. For example, a preceding activity has to be finished before the next activity starts. Each activity usually has a state such as "planned", "in execution" or "finished" which can be interpreted by the workflow system during a project execution to indicate the current state of the whole workflow to a user. Before such a workflow activity is started, project experts or project members have to be assigned to the respective activities. The assigned project members are usually informed automatically about the start of the activity when all preconditions for this activity are fulfilled. The start of an activity can either be initiated automatically by the system or can be done manually by a user with appropriate rights. For example, at a project start, a project manager may initiate a first workflow activity manually. The responsible project experts or project members then execute the steps described by the activity and, when finished confirm the execution of the activity as a response to the system-initiated or manual start of the respective activity. As a result, the system can set a new state for this activity and can initiate further workflow activities or start new workflows, if necessary, i.e., if follow-up activities are modelled in the workflow system.

The active workflow elements do not only interact with a user and change their own state but can also change the state and content of other mechantronic objects or external data.

Although these conventional workflow systems already provide some support for project implementation, a conventional workflow definition is only based on generic mechanisms. Conventional workflow systems provide standard workflows which can be used directly in a projects with few adaptations or allow defining completely new workflow and storing these workflows for reuse across projects. Other projects are only that similar on an abstract level. For example, project management tasks are usually very similar, however, e.g. how to commission a pumping station may depend on the specific devices used in this pumping station which can vary from project to project or which can depend on country-specific safety regulations which have to be obeyed and which have not been employed so far in former projects. In such a scenario, it would be beneficial for the project expert to get specific information about this hardware device directly from an assigned workflow activity. Since defining workflow and executing them in workflow systems causes some efforts, workflow support is usually employed only for highly repetitive tasks which are regulated by a company internally or by external standards or processes.

In conventional workflow systems activities are usually considered in a project workflow, only as far as they are important for later activities. These results are defined in the workflow, but there is in general only very limited connection between the workflow system and the systems in which the results are elaborated, e.g. the engineering systems. Accordingly, conventional workflow systems and concepts do support only very detailed project-specific workflow descriptions for project experts wherein a lot of effort for creating these workflow is necessary. Furthermore, such project-specific workflow are reusable across different projects only with very high efforts.

Furthermore, the conventional workflow systems are only poorly integrated with standard engineering systems used for the technical implementation of the project in which the real work is done. There are provided interfaces which can be used to integrate systems, however, this also requires a lot of preparation work before workflows can be executed in an integrated way.

This means in daily work, a lot of communication with colleagues is necessary for a project member in order to coordinate tasks that have to be done inside or during the activities, if more than one person or user is involved in the project.

In addition, project experts are not supported directly from the workflow with detailed information about the task they are expected to perform, but only on a rather abstract level. The used engineering systems are usually not integrated with the conventional workflow system. Therefore, a manual transfer of information between the workflow system and the engineering systems does not facilitate the daily work of the project experts.

Consequently, a complete project controlling and implementtation with conventional workflow systems is not possible, since the workflow activities are still too far away from the daily tasks and provide less support, the more technical the activity get. This often leads to the coexistence of more fine-granular and maybe discipline-specific workflow which are administered independently from the main workflow and which are often not supported by a system but are often pure instruction lists. This becomes in particular a problem, if persons which are not educated adequately or which do not possess exactly the necessary detailed knowledge required for some tasks which need more support. This scenario will happen even more in the future due to the trend of outsourcing and offshoring project execution as well as by the decreasing number of available project experts. This scenario causes also that workflow definitions are not stringent and not sufficiently detailed thus not supporting less experienced user adequately.

It is an object of the present invention to provide an integrated engineering and workflow system for engineering and executing workflows of mechatronic objects that overcomes the drawbacks of conventional workflow systems.

This object is achieved by an integrated engineering workflow system comprising the features of claim 1.

The invention provides an integrated engineering and workflow system for engineering and executing workflows of mechantronic objects, wherein each mechatronic object comprises workflow data controlling an execution of at least one workflow within a lifecycle phase of a corresponding mechatronic entity.

Whereas a mechatronic entity ME refers to a physical mechatronic entity or unit a mechatronic object MO refers to mechantronic information which can represent a mechatronic entity ME in an engineering system. Mechatronic objects MO can also exist independently from mechatronic entities and can be used e.g. for organisational purposes. Mechatronic objects MOs can be stored in libraries or repositories for being reused. However, it is also possible that mechatronic objects MOs are generated during a project and are exclusively used for the respective project.

With the present invention, the workflow can be executed directly from a mechatronic structure itself without having the need to generate a workflow first. The integrated workflow system for engineering and executing of workflows of mechatronic objects enables an easy and effortless supplementation of a project workflow taking into account the technical activities which have to be performed. Integration of support on the one hand helps the experts responsible for the activities, but also decreases possible errors and thus enhances the quality of the project results. Since the necessary workflow information can be delivered immediately to the project experts, no time is lost for searching exactly this workflow information. The system further allows project managers and other users to watch a progress of the project in much more detail because they are provided with a real current state of the respective project.

In another possible embodiment of the integrated engineering and workflow system for engineering and executing workflows of mechatronic objects, the workflow data comprises an executable workflow control program with a workflow control program code including instructions to perform the respective workflow. Accordingly, the steps of the workflow can be executed automatically. For example, version data can be generated and stored in a workflow.

In a possible embodiment of the integrated engineering and workflow system according to the present invention, the workflow data can comprise interpretable workflow configuration data which is interpreted by an interpreter to perform the respective workflow.

In a possible embodiment of the integrated engineering and workflow system according to the present invention, the mechatronic objects are data objects which are stored in a database of said integrated engineering and workflow system.

In a further possible embodiment of the integrated engineering and workflow system, mechatronic objects are data objects which are stored in data memories of corresponding mechantronic entities connected to the integrated engineering and to the workflow system via a data network.

Workflow information or workflow data from the mechatronic objects form the program which can control the workflow for a technical system such as an assembly line.

In a further embodiment of the integrated engineering and workflow system, the workflow is an interactive workflow wherein information data of the workflow is output to a user terminal and wherein command data for said workflow is input by said user terminal.

In a possible embodiment of the integrated engineering and workflow system according to the present invention, mechatronic objects have interfaces comprising parameter interfaces to exchange parameter data and message interfaces to exchange messages with each other via logical interface-connections and/or with a data processing unit of said integrated engineering and workflow system.

In a possible embodiment of the integrated engineering and workflow system according to the present invention, the executable workflow control program is instantiated during an engineering phase of the respective mechatronic entity or during a runtime of the respective workflow.

Such a workflow control program can be started during any lifecycle of the mechatronic objects and can relate to each possible phase of the lifecycle.

In a possible embodiment of the integrated engineering and workflow system according to the present invention, at least one user terminal of a user is connected to the data processing unit of said integrated engineering and workflow system.

In a possible embodiment of the integrated engineering and workflow system, each user terminal comprises a graphical user interface having output means to output information data of the workflow to said user and input means to input commands for said workflow by said user .

In a possible embodiment of the integrated engineering and workflow system according to the present invention, the output information data of the workflow comprises messages provided by mechatronic objects via message interfaces of the mechatronic objects to the user terminal.

In a possible embodiment of the integrated engineering and workflow system the output information data can indicate at least one action to be performed by said user during a workflow step of the respective workflow.

In a possible embodiment of the integrated engineering and workflow system according to the present invention, the input commands for said workflow comprise parameter settings for mechatronic entities and workflow instructions provided by said user terminal via parameter interfaces to mechatronic objects.

In a possible embodiment of the integrated engineering and workflow system according to the present invention, the lifecycle phase of the mechatronic entity comprises one of a group of lifecycles comprising an engineering phase, a commissioning phase, an operation phase and a disposal phase, an update phase of the mechatronic entity or any other life cycle phase.

The invention further provides a method for performing a workflow within a lifecycle phase of a mechatronic entity, wherein a corresponding mechatronic object of said mechantronic entity comprises workflow data controlling an execution of the respective workflow.

A possible embodiment of the method according to the present invention, the workflow is formed by an interactive workflow wherein the information data of said workflow is output to a user terminal of a user and command data for the workflow is input into said user terminal by a user .

The commands data can also be used, for example, to indicate necessary information for the work by means of other programs which are necessary for a decision. Other documents can be stored in a special file.

In a possible embodiment of the integrated engineering and workflow system according to the present invention, the workflow data comprises a workflow control program having a workflow control program code executed by at least one processing unit to perform the respective workflow.

In another possible embodiment of the integrated engineering and workflow system according to the present invention, the workflow data comprises workflow configuration data which is interpreted by an interpreter to perform the respective workflow.

The following possible embodiment of the integrated engineering and workflow system for engineering an executed workflow of mechatronic objects and a corresponding method for performing a workflow within a lifecycle phase of a mechatronic object are described with reference to the enclosed figures.
- Fug. 1: shows a first possible embodiment with an integrated engineering and workflow system for the engineering and executing of workflow of mechatronic objects according to the present invention;
- Fig. 2: shows a further possible embodiment of an integrated engineering and workflow system for engineering and executing workflow of mechatronic objects according to the present invention;
- Fig. 3: shows a data structure of a mechatronic object according to a possible implementation of the integrated engineering and workflow system for engineering and executing workflows of mechatronic objects;
- Fig. 4: shows a further diagram for illustrating an apparatus and a method for performing a workflow within a lifecycle phase of a mechatronic entitiy according to a possible aspect of the present invention.

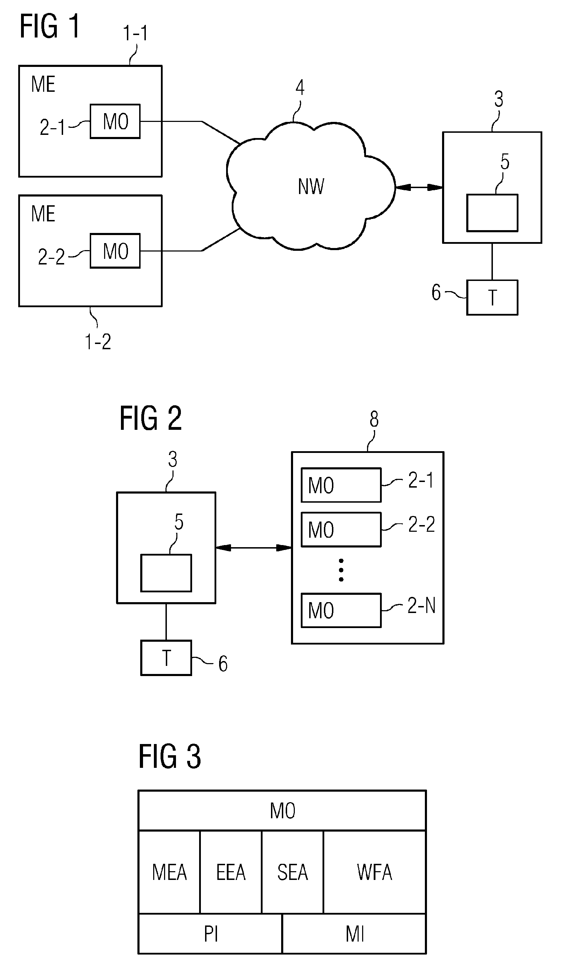

As can be seen in Fig. 1, mechatronic entitites 1-1, 1-2 each can comprise a corresponding mechatronic object 2-1, 2-2. A mechatronic object 2-1, 2-2 can be a data object which is stored in a data memory of the corresponding mechatronic entities 1-1, 1-2 and can be accessed in the shown implementation by the integrated engineering and workflow system 3 via a data network 4. Each mechatronic object 2-1, 2-2 can comprise workflow data for controlling an execution of at least one workflow within a lifecycle phase of the corresponding mechatronic entity 1-1, 1-2. The integrated engineering and workflow system 3 comprises an integrated data processing unit 5 and a data interface connecting that engineering and workflow system 3 to at least one user terminal 6. The terminal 6 can be a user terminal which comprises a graphical user interface, GUI, having output means to output information data of said workflow to said user and input means to input commands for said workflow by said user. The user can be a project member of the respective project. Each mechatronic object 2-i as shown in Fig. 1 can comprise workflow data controlling an execution of at least one workflow in a lifecycle phase of a corresponding mechatronic entity. The term mechatronic describes an interplay of different discipline, like mechanical engineering, electrical engineering, software engineering and the respective components. This interplay can be described with digital representations of objects called mechatronic objects MO. A mechatronic object MO such as the mechatronic objects 2-i of Fig. 1 can carry different facets for data structures, wherein each facet or aspect can be provided for a corresponding discipline such as mechanical engineering, electrical engineering or software engineering. These facets or aspects can contain the data of such a discipline wherein the MO data structure can aggregate and connect the respective data. The mechatronic objects MO can describe a corresponding mechatronic entity or element, such as a machine. This mechatronic entity can be integrated for example in an assembly line. In this exemplary implementation, the mechatronic objects of the machines or mechatronic entities can be aggregated in a parent mechatronic object for the assembly line. The concept depends on that the mechatronic object MO has defined interfaces which can be interconnected, so that encapsulation of information is possible. Mechatronic object can comprise in a possible implementation interfaces comprising parameter interfaces to exchange parameter data and message interfaces to exchange messages with each other via logical interface connections and/or with a data processing unit such as the data processing unit 5 of the integrated engineering and workflow system 3 as shown in Fig. 1.

According to the system and method of the present invention, workflow aspects, such as activities and status or resource information are included in mechatronic objects MO as additional information data. Accordingly, the mechatronic objects MO as employed by the present invention comprise the workflow aspect besides already existing aspects, such as mechanical or electrical engineering aspects. If mechatronic entities ME are put together or are assembled in a system, for example to build up a plant solution or a device or product, the workflow aspects of the corresponding mechantronic data objects MO are also integrated with each other. The integration of the mechatronic data objects MO can be performed either by the same system in which the mechatronic data objects of the corresponding mechantronic entities ME are put together, i.e. the engineering system or by a specialized system which provides the workflow functionality, but is integrated with the engineering system. This workflow system 3 supports the creation of a project workflow based on the workflow aspects provided by the different mechatronic objects MO as well as the workflow execution and workflow monitoring during project implementation.

Activities defined by mechantronic objects MO can be concatenated based on the structure of a mechantronic object tree and united in a superordinated activitiy attached to a superordinated mechatronic object. For example, activities of dependent mechatronic objects MO are serialized or activities of independent mechatronic objects MO are parallelized in the activitiy of a superordinated mechatronic object. Status and resource information can also be used by superordinated mechatronic objects in a mechatronic object tree to aggregate the information to the status and resource information of the superordinated mechatronic object MO. This means that a status and resource requirement of a mechatronic object MO can be calculated based on the status and resource information of the respective mechatronic object MO and its subordinated mechantronic objects. This can be either used for triggering activities or for getting an overview of the status of the whole project. During a project execution, the resource information can be used as resource requirements, for example the kind of expert or laboratory required for which number of working hours. The resource requirements can be fulfilled in order to execute the project. It is also possible to define a number of different statuses which are connected to a project phase.

After having generated a project flow created in a workflow system 3 as shown in Fig. 1 once can carry out a workflow which triggers activities, calls for user action, receives user responses and can track a status of a respective project.

In a possible exemplary embodiment, the workflow system 3 can be split into two systems, i.e. a workflow definition and a workflow execution system. In a possible embodiment, the workflow data of a mechatronic object 2-i as shown in Fig. 1 can comprise an executable workflow control program having a workflow control program code including instructions to perform automatically the respective workflow.

In an alternative implementation or embodiment, the workflow data of a mechatronic object 2-i can comprise interpretable workflow and configuration data which is interpreted by an interpreter to perform the respective workflow.

There can be variations in how workflow information is described. Further, there can be performed an active execution of the workflow aspects or an interpretion of the workflow aspects of the respective mechatronic objects. Both variations have a common procedure. During engineering of the mechatronic objects 2-i, the workflow aspects are created or instantiated, interconnected and parameterized. The complete mechatronic object can comprise at least one structured workflow aspect which is sufficient to define a workflow for the supported project phase such as a construction or commissioning phase. There can also be mechatronic objects which do not participate in the workflow.

A mechatronic object 2-i can support the workflow aspects for an arbitrary number of project phases. A workflow aspect controls e.g. the parameterization of a mechatronic object 2-i during engineering and another workflow aspect enables a consistency check during commissioning. It is also possible that a workflow aspect is assigned to a mechatronic object 2-i in general as well as that a workflow aspect is assigned to a specific facet or aspect of the mechantronic object 2-i. According to the integrated engineering workflow system tool according to the present invention can combine the engineering of the mechatronic object data structure and the control of the execution of the workflow of an assembly line of plant. Integrated engineering of a workflow system can still be used with different tools for both tasks, if different tools access the same database for the mechatronic objects or keeps the data otherwise in synchronization, for example by exchanging data with each other.

During engineering the engineering system can support the logical interconnection of mechatronic objects 2-i or the workflow aspects in order to shape the respective workflow. Its logical interconnection can be created in a possible implementation manually between aspects or the engineering or workflow system interprets the mechatronic object data structures and executes the workflow according to this data structure automatically.

Fig. 2 shows a further possible embodiment of an integrated engineering and workflow system for engineering and executing workflows of mechatronic objects (MO) 2-i of the present invention.

As shown in the embodiment of Fig. 2, a plurality of mechantronic objects 2-i can be stored in database 8. In the embodiment of Fig. 1, the mechatronic object 2-i can be read from the real mechantronic entities 1-i, whereas the system 3 in the embodiment of Fig. 2 loads the mechatronic objects 2-i from the database 8. The database 8 can be integrated in the workflow system 3 or accessible via a data network not shown in Fig. 2. In both embodiments of Fig. 1 and Fig. 2, the workflow can be an interactive workflow, and information data of said workflow can be output to the user terminal 6 wherein command data for said workflow is input by means of said user terminal 6 by a user .

In a possible implementation, the executable workflow control program is instantiated during a lifecycle phase of the respective mechatronic entity 1-i. It is further possible, that the executable workflow control program is instantiated during a runtime of the respective workflow. At least one user terminal 6 of a user is connected to the data processing unit 5 of the integrated engineering workload system 3 as shown in Figs. 1 and 2. Each user terminal 6 can comprise a graphical user interface, GUI, having output means to output information data of the workflow to the user and input means to input commands for the workflow by the user.

Output information of the workflow comprises messages provided by mechatronic objects 2-i via message interfaces of the respective mechatronic objects to the user terminal 6. Output information data can indicate at least one action to be performed by the user during a workflow step of the respective workflow.

Input commands input into the terminal 6 by the user can comprise parameter settings for mechatronic entities 2-i and workflow instructions provided by the user terminal 6 via parameter interfaces of mechatronic objects 2-i.

In a possible embodiment, an active execution of the workflow aspect is performed. Active workflow aspects can contain code or definitions which can be executed directly in an adequate environment such as the processing unit 5 of the system 3 as shown in Figs. 1 and 2. The environment can support basic services so that only specific tasks for the workflow have to be stored in the workflow aspects. Furthermore, it is possible to interact with the user by displaying mismatches. The system can trace a process or workflow. Process information can also be accessed by the code or definitions of the active workflow aspects, for example via a defined interface service. Accordingly, the active workflow aspects can receive and create so-called events and access and alter parameters from the environment or other mechatronic objects.

Workflow aspects of a mechatronic object 2-i can run their own tasks and interact with workflow aspects of other mechatronic objects as well as with their technical environment. Mechatronic objects 2-i can be instantiated by the environment at any time. If they are not already instantiated during engineering by the engineering system the workflows can be instantiated and executed at runtime .

In a further possible variant, workflow aspects are not executed, but interpreted. In this implementation or embodiment, the workflow aspects of the mechatronic objects 2-i do not comprise code or definitions which can be executed directly. In this embodiment, the information of the workflow aspect is interpreted by a runtime system evaluating the mechatronic objects 2-i. The runtime system can comprise an algorithm how to evaluate the workflow aspects, when the workflow aspects store compatible information for the algorithm and the needed data . Workflow aspects can be integrated in the environment. Possible implementations of the workflow aspects can be described in a predetermined language to be interpretable. When the user creates or generates a workflow aspect for a mechatronic object 2―i, he either uses this predetermined language directly or a graphical user interface GUI can be provided which allows the user to design the workflow aspects by selecting and combining standard workflow elements including a workflow tool such as ARIS.

In a possible embodiment, a defined workflow exists in the engineering system which is either a standard workflow or which is created for a specific engineering project within the engineering system. In a possible embodiment workflow aspects of a mechatronic object 2―i can contain only configuration data for this workflow. The interpreter executes a workflow and looks up the configuration data from the respective mechatronic objects 2-i, i.e. the interpreter loads configuration data from the mechatronic objects 2-i. These configuration data can be defined unambiguously at least for this engineering system in order to be interpretable. It can also be that a graphical user interface, GUI, guides a user through the configuration possibilities for the currently processed mechatronic object 2―i. Thus, the engineering system can aggregate all configuration possibilities which can be set by a mechatronic object 2―i and can present a generated list to the user for parameterization. In a further possible implementation, each mechatronic object 2-i defines the necessary data which has to be created or generated in order to finish work on this mechatronic object 2-i during engineering. A standard workflow can collect this information and check a state of each mechatronic object 2-i in order to combine them to an overall state. Dependent on this overall state, the standard workflow can both generate a list of unfinished objects and trigger a user to finish them or it may acknowledge the completion of the engineering step and trigger the next workflow step. In addition to the described three possibilities, any combination thereof is possible.

In a possible embodiment, passive workflow aspects can be used by active aspects which allows a lean creation of simple mechatronic objects 2-i. The passive workflow aspects of simple mechatronic objects 2-i can then be used by higher-level mechatronic objects with active workflow aspects. For example, a mechatronic object 2-i can define actions which have to be executed: a higher-level mechatronic object can execute these actions integrated with its own workflow aspects by interpreting the description of this passive workflow aspect .

Fig. 3 shows a diagram for illustrating a data structure of mechatronic object MO such as mechatronic objects 2-i in Figs. 1, 2 which can be employed by the system according to the present invention. It can be seen that the mechatronic object MO can comprise aspects or facets for responding to different disciplines such as mechanical engineering, electrical engineering and software engineering. For example in Fig. 3, the mechatronic object MO comprises a mechanical engineering aspect MEA, an electrical engineering aspect EEA and a software engineering aspect SEA. The mechatronic object MO can comprise also at least one workflow aspect WFA. The mechatronic object MO further comprises in the shown example, a parameter interface PI, for exchange of parameter data and a message interface MI to exchange messages with other mechatronic objects MO via logical interface connections or with a data processing unit of the integrated engineering and workflow system. It is possible that workflow aspects are included in other aspects or only relate to another aspect.

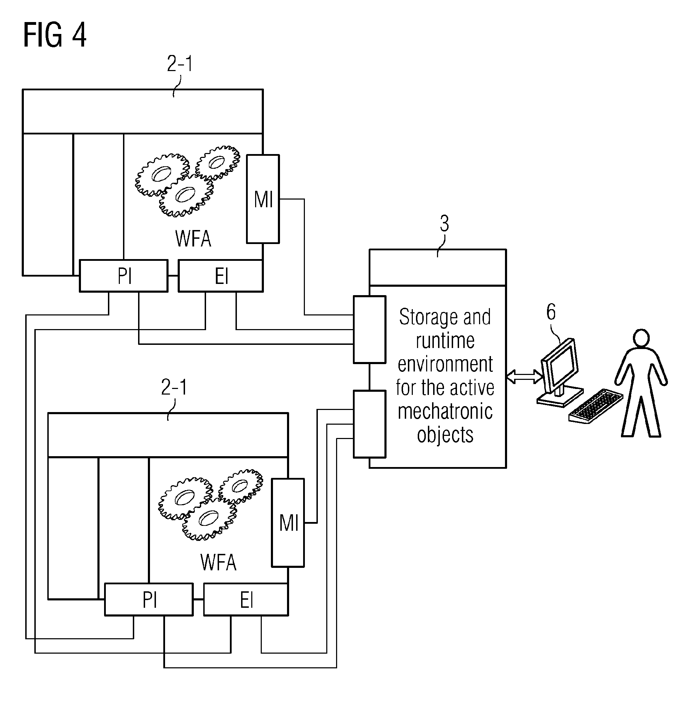

Fig. 4 shows a diagram for illustrating an exemplary embodiment of the integrated engineering and workflow system according to the present invention. In the shown diagram, the mechatronic object 2-1, 2-2 are connected via message interfaces MI to the engineering and workflow system 3. The mechatronic objects 2-i comprise each at least one parameter interface PI connecting the mechatronic object 2-i to other mechatronic objects. Furthermore, an event interface or message interface can be provided for exchanging messages between mechatronic objects 2-i and/or the system 3 as shown in Fig. 4. As can be seen in Fig. 4, both mechatronic objects 2-1, 2-2 comprise an active workflow aspect in the shown implementation.

The system according to the present invention has the advantage that the mechatronic data structure can be instantly considered in the workflow, thus making iterative work and changes easier and more reliable.

A generation of the workflow is not needed any more which saves time for filling the workflow system and updating it after changes have been performed.

It is not possible any more that the workflow and the engineering get out of synchronization. The workflow can be provided directly by the mechatronic object 2-i which means less effort, less time and higher quality in case of reusable mechatronic objects.

A further advantage is that the workflow information can be assigned to exactly that mechatronic object 2-i to which it belongs which makes it easier to comprehend and define a workflow in comparison to a monolithic workflow definition approach.

Finally, the method and system provides a high flexibility for the user . The integrated workflow aspects of the mechatronic objects 2-i enforce a well-regulated working which is less error-prone and faster and makes it possible to employ a less experienced work force for engineering tasks.

In a possible embodiment, the mechatronic objects 2-i have several workflow aspects which can be designed in a library and are used in a project during the engineering phase. When such a mechatronic object 2-i is instantiated, then the workflow aspects of this mechatronic object 2-i are activated and belong to the phase engineering, e.g. a workflow aspect may define and control the workflow for parameterizing the mechatronic object 2-i which requires input from different disciplines, for example, a workflow aspect assigned a task to a mechanical engineer, an electrical engineer or an automation engineer.

The workflow system in the engineering system according to the present invention can be set up before the project and on the one hand it can define the role of different users such as mechanical engineer, electrical engineer and automation engineer and, on the other hand, it can assign real persons to these defined roles. The workflow system can use this information to inform the appropriate users or engineers. The engineers are triggered either by the workflow system or engineering system or the respective workflow aspect itself. Then they can provide their input such as parameterization of the mechatronic objects 2-i. The engineers can acknowledge changes and confirm the completion of the assigned tasks. The mechatronic object 2-i can accept the changes and can acknowledge the fulfilment of a workflow aspect and may proceed further with the workflow.

If a project enters the next phase, for example the commissioning phase, then any workflow aspect of the interface, such as the commissioning phase, can be activated. For example, if a commission requires to fill in a test protocol for the correct functioning of the mechatronic object 2-i.

As long as a workflow aspect does not complete a mechatronic object, it is in a specific state, such as "in-work" relative to its project phase. The workflow system or engineering system can display a state and make sure that all mechatronic objects 2-i are still in this specific state to be recognizable by the relevant users. The system can always a current state of the project. Further, the states can be aggregated by the engineering system and processed for the user, e.g. project accomplished to 80 %.

Either a mechatronic object 2-i or the workflow system or engineering system 3 can actively send messages to the roles which have a task assigned. The messages can then be forwarded to the assigned persons. A workflow aspect can relate to a whole mechatronic object 2-i or to a single facet of a mechatronic object 2-i, for example, a mechatronic object "pumping station" can contain a workflow description about general workflow information needed for integration regarding the pumping station, such as status information for superordinated workflows, e.g. "not available", "erected", "tested" and "available".

The mechatronic objects 2-i may contain detailed workflow descriptions on a general level, but also on a facet level, e.g. the mechatronic object 2-i may describe in an activity or by defining split activities how to erect or to automate the pumping station, but it can also specify skills needed for the design, commission and for the maintenance or even scrapping of the mechatronic object 2-i or can give information about dependencies to other mechatronic objects.

The pumping station as a mechatronic entity ME may be engineered only when the technical constraints on the pumping station are fully known, provided by adjacent mechatronic objects. Further, this information can be fully provided by predefined mechatronic object types or the information can be supplemented or changed in instances by the user when utilizing or instantiating the mechatronic object types in a project.

## Claims

1. An integrated engineering and workflow system (3) for engineering and executing workflows of mechatronic objects (2-i),
wherein each mechatronic object (2-i) comprises workflow data controlling an execution of at least one workflow within a life-cycle phase of a corresponding mechatronic entity (1-i).

2. The integrated engineering and workflow system according to claim 1,
wherein said workflow data comprises an executable workflow control program having a workflow control program code including instructions to perform automatically the respective workflow.

3. The integrated engineering and workflow system according to claim 1,
wherein said workflow data comprises interpretable workflow configuration data which is interpreted by an interpreter to perform the respective workflow.

4. The integrated engineering and workflow system according to claims 1 to 3,
wherein said mechatronic objects (2-i) are data objects which are stored in a database (8) of said integrated engineering and workflow system (3) or which are stored in data memories of corresponding mechatronic entities (1-i) connected to said integrated engineering and workflow system (3) via a data network (4).

5. The integrated engineering and workflow system,
wherein said workflow is an interactive workflow,
wherein information data of said workflow is output to a user terminal (6) and command data for said workflow is input by means of said user terminal (6).

6. The integrated engineering and workflow system according to claims 1 to 5,
wherein the mechatronic objects (2-i) have interfaces comprising
parameter interfaces (PI) to exchange parameter data and message interfaces (MI) to exchange messages with each other via logical interface-connections and/or with a data processing unit (5) of said integrated engineering and workflow system (3).

7. The integrated engineering and workflow system according to claim 2,
wherein said executable workflow control program is instantiated during an lifecycle phase of the respective mechatronic entity (1-i) or during a runtime of the respective workflow.

8. The integrated engineering and workflow system according to claims 6 to 7,
wherein at least one user terminal (6) of a user is connected to said data processing unit (5) of said integrated engineering and workflow system (3),
wherein each user terminal (6) comprises a graphical user interface having
output means to output information data of said workflow to said user and
input means to input commands for said workflow by said user.

9. The integrated engineering and workflow system according to claims 6 to 8,
wherein said output information data of said workflow comprises messages provided by mechatronic objects (2-i) via message interfaces (MI) of said mechatronic objects (2-i) to said user terminal (6),
wherein said output information data indicates at least one action to be performed by said user during a workflow step of the respective workflow.

10. The integrated engineering and workflow system according to claims 6 to 9,
wherein said input commands for said workflow comprise parameter settings for mechatronic entities (1-i) and workflow instructions provided by said user terminal (6) via parameter interfaces (PI) to mechatronic objects (2-i).

11. The integrated engineering and workflow system according to claims 1 to 10,
wherein said life cycle phase of said mechatronic entity (1-i) comprises
an engineering phase,
a commissioning phase,
an operation phase, and
a disposal phase of said mechatronic entity.

12. A method for performing a workflow within a life cycle phase of a mechatronic entity (1-i),
wherein a corresponding mechatronic object (2-i) of said mechatronic entity (1-i) comprises workflow data controlling an execution of the respective workflow.

13. The method according to claim 12,
wherein said workflow is formed by an interactive workflow,
wherein information data of said workflow is output to a user terminal (6) of a user and command data for said workflow is input into said user terminal (6) by the user.

14. The method according to claim 12 or 13,
wherein said workflow data comprises a workflow control program having workflow control program code which is executed to perform the respective workflow.

15. The method according to claim 12 or 13,
wherein said workflow data comprises workflow configuration data which is interpreted by an interpreter to perform the respective workflow.
